# DEMANDE DE BREVET EUROPEEN

(11) **EP 0 656 598 A1**
(43) Date de publication de la demande: **07.06.1995**
(21) Numéro de dépôt: 94401443.0
(22) Date de dépôt: 27.06.1994
(51) Int. Cl.: G06K 7/06

(54) **Cadre de contact et connecteur pour carte**

(30) Priorité: 10.03.1994 FR 9402756; 01.12.1993 FR 9314371
(71) Demandeur: FRAMATOME CONNECTORS INTERNATIONAL, 92400 Courbevoie (FR)
(72) Inventeur: Pernet, Michel, F-25300 Pontarlier (FR)
(74) Mandataire: Farges, Roger

(57) **Abrégé**

L'invention concerne un cadre de contact pour carte électronique, comportant un corps isolant dans lequel sont disposées une première et une deuxième rangées d'éléments de contact électrique présentant une face de contact avec la carte et définissant des paires d'élements de contact situés en vis-à-vis ainsi qu'une première et une deuxième lame de contact de détection caractérisé en ce que la première lame de détection (80) présente une région d'appui de la carte coopérant mécaniquement avec la carte de manière que, lorsque la carte est mise en place par rapport au cadre de contact, la première (80) et la deuxième (90) lame de contact viennent en contact électrique, et en ce qu'il comporte une région électriquement isolante (110) disposée sur une face supérieure de la première lame, au moins dans ladite région d'appui.

## Description

La présente invention a pour objet un cadre de contact pour cartes électroniques, d'un type comportant un corps isolant dans lequel sont disposées une première et une deuxième rangées d'éléments de contact électrique définissant des paires d'éléments de contact situés en vis-à-vis et comprenant également une première et une deuxième lame de contacct de détection.

Un tel cadre de contact est connu de la demande de brevet français FR-A-2623314, intitulée "Cadre de contact pour carte à puce, avec contact de fin de course". Il comporte deux lames de contact portées par un bord du cadre jouxtant une des rangées de contact, une des lames étant mobile et entrainée dans un mouvement d'actionnement parallèle à la direction d'insertion de la carte et opposé à cette direction.

Un tel cadre de contact est également connu de la demande de brevet européen EP-A-366513. Il comporte des lames de contact de fin de course qui sont surmoulées dans le cadre de contact et qui sont obtenues à partir des mêmes deux bandes dans lesquelles les éléments de contact sont pré-découpés, après successivement deux opérations spécifiques de cambrage à 90°.
Les cartes à microcircuit ("cartes à puce") possèdent en général deux rangées de quatre plages de contacts. Les plages ont en général la même dimension, mais la norme autorise, pour les deux plages externes, du côté du bord de la carte, une largeur supérieure : éventuellement, elles peuvent même s'étendre jusqu'au bord de la carte.
Il est donc en pratique impossible de disposer un contact de détection, par exemple un contact de présence carte, à côté des éléments de contact électrique du cadre de contact, une telle disposition entraînant ipso facto des courts-circuits ou à tout le moins des contacts électriques non désirés.
La présente invention a pour objet un cadre de contact ne présentant pas les inconvénients précités.
L'invention concerne ainsi un cadre de contact pour carte électronique, comportant un corps isolant dans lequel sont disposées une première et une deuxième rangées d'éléments de contact électrique présentant une face de contact avec la carte et définissant des paires d'élements de contact situés en vis-à-vis ainsi qu'une première et une deuxième lame de contact de détection caractérisé en ce que la première lame de détection présente une région d'appui de la carte coopérant mécaniquement avec la carte de manière que, lorsque la carte est mise en place par rapport au cadre de contact, la première et la deuxième lame de contact viennent en contact électrique, et en ce qu'il comporte une région électriquement isolante disposée sur une face supérieure de la première lame, au moins sur ladite région d'appui.

La région électriquement isolante est avantageusement une lame isolante formant une seule pièce avec le corps isolant et raccordée à celui-ci par une région proximale recouvrant une région proximale de la première lame.
Le cadre de contact est avantageusement caractérisé en ce que la première et la deuxième lames de contact de détection sont disposées respectivement sur la première et la deuxième rangée, en vis-à-vis l'une de l'autre, au moins la première lame de contact ayant une longueur supérieure à celle des éléments de contact.

La première lame de contact présente avantageusement une extrémité distale en forme de crosse dont la concavité est dirigée du côté de la face de contact des éléments de contact, c'est-à-dire vers la carte. Cette extrémité distale en forme de crosse présente avantageusement un prolongement en forme de crosse dont la concavité est dirigée du côté opposé à la face de contact des éléments de contact, c'est-à-dire du côté opposé à la carte. Par appui sur l'extrémité en forme de crosse, en même temps que sur les extrémités similaires des éléments de contact, la carte permet la détection de présence par mise en contact électrique du prolongement en forme de crosse, incurvé dans le sens opposé, avec l'extrémité de la deuxième lame de contact A cet effet, la deuxième lame de contact peut alors présenter une extrémité distale en forme de palette, ledit prolongement de la première lame venant en recouvrement avec au moins une partie de ladite extrémité distale en forme de palette.

L'invention concerne également un connecteur présentant un cadre de contact tel que défini ci-dessus.
Selon un mode de réalisation avantageux, il comporte un couvercle comprenant un logement de la carte et qui est articulé par rapport au cadre de contact. La première et la deuxième lame de contact permettent alors aussi bien une détection de présence que de fin de course de la carte.
Selon un autre mode de réalisation, le connecteur présente un guide de carte permettant son insertion dans une direction nominale parallèle à la carte. Dans ce cas, les lames de contact permettent, selon leur positionnement, soit une simple détection de présence de la carte, soit une détection à la fois de présence et de fin de course de la carte. Dans ce deuxième cas, il est avantageux que le guide soit profilé de manière à appuyer la carte en direction du cadre de contact et enfoncer les éléments de contact et au moins la première lame de contact, au voisinage d'une position de fin de course de la carte.

D'autres caractéristiques et avantages de l'invention apparaîtront mieux à la lecture de la description qui va suivre, donnée à titre d'exemple non limitatif, en liaison avec les dessins qui représentent:
- la figure 1, un connecteur pour carte selon la demande de brevet français 93 08397 déposée le 8 juillet 1993 par la Demanderesse;
- les figures 2a et 2b, respectivement en vue de côté et en vue de dessus, un cadre selon l'invention, après son obtention par surmoulage et avant découpe des rives des bandes conductrices, les figures 3a et 3b représentant ce même cadre après découpe des rives et pliage des extrémités de contact externes;
- les figures 4a,4b et 4c, respectivement en vue de dessus, encoupe AA, et en coupe BB, une portion de bande conductrice correspondant à une rangée d' éléments de contact, et les figures 5a, 5b et 5c, respectivement en vue de dessus, en coupe CC et en coupe DD, une portion de bande conductrice correpondant à l'autre rangée d'éléments de connexion;
- et les figures 6a à 6c en coupe longitudinale, un cadre de contact selon l'invention, dans trois positions caractéristiques.

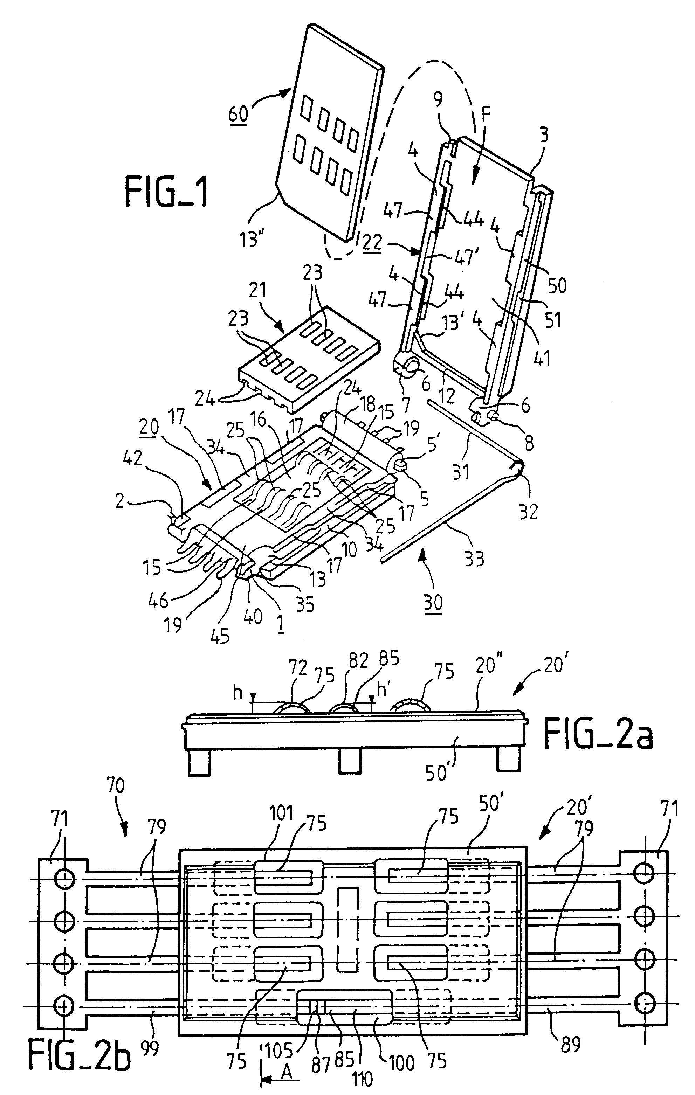

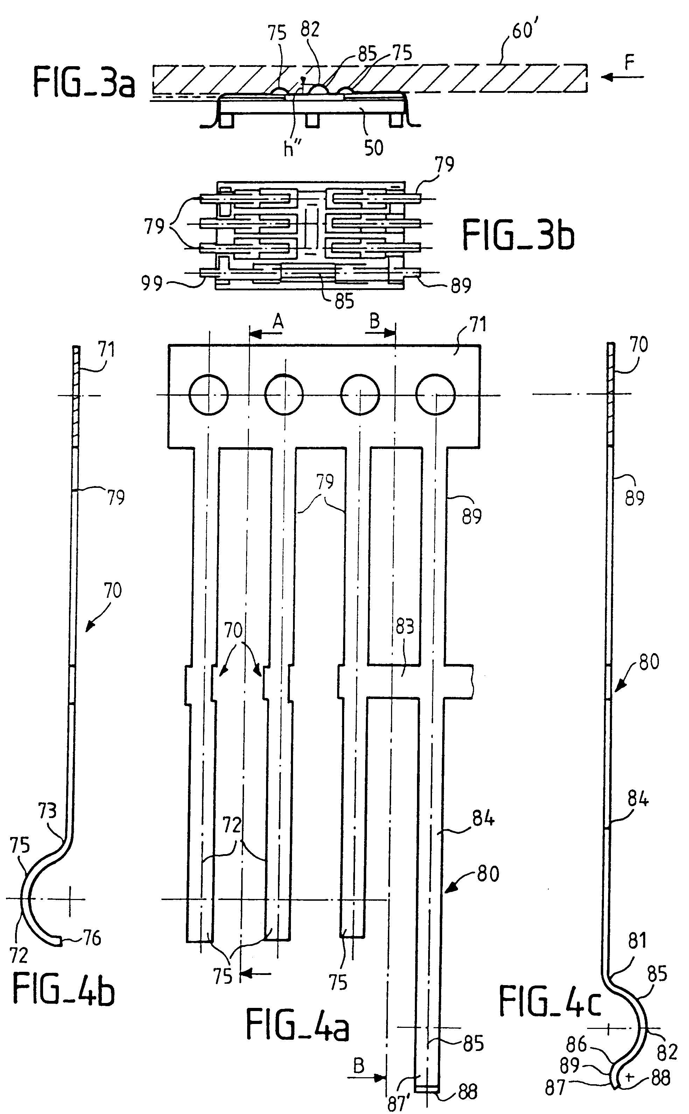

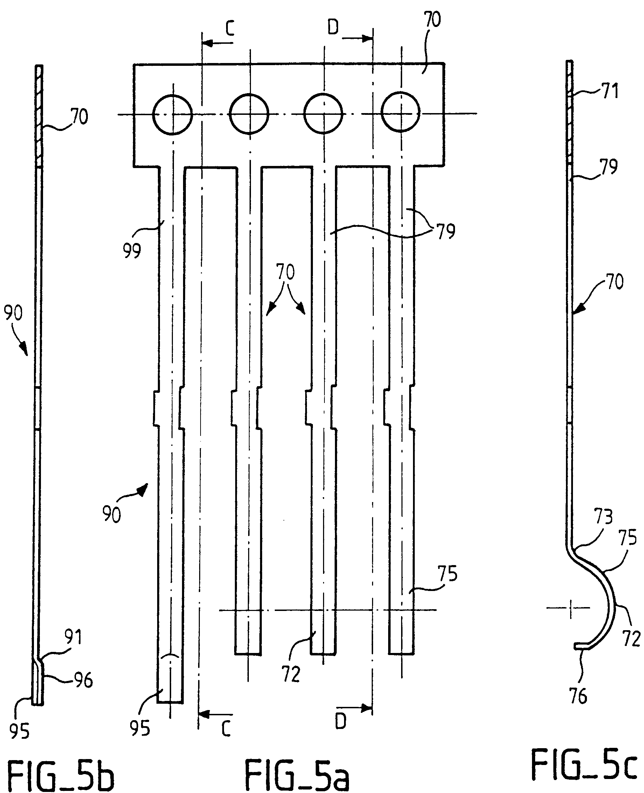

A la figure 1, un cadre ou socle désigné par le repère général 20 comporte des lames 15 formant des éléments de contact moulés dans la masse de celui-ci. Chaque lame comporte une extrémité 19 qui dépasse d'un bord longitudinal 46 et une autre extrémité recourbée 25 qui dépasse de la face supérieure 45 du socle 20. Les extrémités 25 sont disposées dans une ouverture sensiblement rectangulaire 16 qui leur permet un débattement vertical.
Un capot 22 présente en dessous de sa face inférieure deux glissières longitudinales 4 situées au voisinage de ses bords longitudinaux de manière à guider la carte 60 dans les rainures 44. Le capot 22 est articulé (5,5',6,7) sur le socle, avec rappel par ressort 30. Le verrouillage du capot 22 sur le socle 20 s'effectue par coopération des ergots latéraux 1 et 2 du socle 20 avec les encoches des ergots 3 et 9 qui font partie des glissières d'introduction 4 de la carte dans le capot 22. La carte est introduite dans les glissières 4 jusqu'à venir en butée 12 au voisinage des logements cylindriques 6. La carte comporte un pan coupé 13'' qui vient s'appuyer sur le plan incliné 13' formant détrompeur. Le capot 22 est rabattu sur le socle 20 et la fermeture s'effectue par déformation élastique du boîtier 22 grâce en particulier aux chanfreins 43 qui viennent repousser les faces interne 3' et externe 9' des ergots 3 et 9, et/ou par la présence d'un jeu latéral entre les charnières.
Le déverrouillage s'effectue par poussée dans le sens de la flèche 14 par déformation latérale du capot 22 de manière à libérer les ergots 1 et 2, ce qui permet au capot 22 de s'ouvrir sous l'action du ressort 30.
En se reportant maintenant aux figures 2 à 5, un cadre ou socle 20' selon l'invention comporte, outre des éléments de contact 70 organisés suivant deux rangées, et ayant des extrémités de contact externes recourbées 79 et des extrémités de contact 75 en forme de crosse pour venir en contact avec la carte et dont le sommet 72 dépasse d'une hauteur h d'un bord supérieur 20'' du cadre 20', une paire de contacts de détection ou lames de contact 80 et 90. Aux figures 2a et 2b, le cadre 50' a été surmoulé autour des deux bandes de contact métalliques qui présentent encore leurs rives 71. Aux figures 3a et 3b, les rives 71 ont été coupées et les extrémités externes de contact 79 et 89 ont été pliées pour permettre un contact à plat. Les lames de contact 80 et 90 sont portées chacune par une des bandes de contact et leurs extrémités distales sont logées dans des lumières 100, les extrémités distales des éléments de contact 70 étant logées dans des lumières 101. Les contacts se trouvent en vis-à-vis et en recouvrement partiel de leurs extrémités 87 et 95. Le contact 80 présente , après cambrage en 83,une région en forme de crosse 85 dont le sommet 82 est dirigé vers la carte 60', et dont l'extrémité distale se prolonge à partir de la zone 86 de changement de concavité, par une deuxième région en forme de crosse 89, de plus petit rayon et qui se termine en 88. La crosse 89 a sa concavité dirigé dans le sens opposé à la carte 60, et son sommet 87 fait face à l'extrémité 95 en forme de palette cambrée en 91 de l'autre contact de la paire.

Lorsque la carte 60' est présentée, soit dans le sens de la flèche F (Fig. 3a), soit par rabattement d'un couvercle tel que celui représenté à la figure 1, la carte 60' appuie mécaniquement sur le sommet 82 de la crosse 85 et enfonce le contact 80 grâce à l'élasticité de la lame 84 qui le constitue. Cet enfoncement a pour conséquence que le sommet 87 de la crosse 89 vienne en contact mécanique et électrique avec la palette 95. La face de contact 72 constituée par le sommet de la crosse 75 des éléments de contact 70 est également enfoncée pour assurer un contact éléctrique avec la carte 60'.

Sur les dessins, on a représenté les contacts 80 et 90 comme étant plus longs que les contacts 70. En fait, il suffit que ce soit le cas pour un seul d'entre eux. Dans le cas où la carte 60' est introduite de manière classique suivant la flèche F, les contacts 80 et 90 remplissent au moins la fonction de détection de présence. Ils peuvent également remplir la fonction de détection de fin de course, soit en disposant d'un contact 80 de grande longueur de manière que la carte 60' ne viennre enfoncer sa crosse 85 qu'en fin de course, soit en munissant le connecteur d'une rampe d'introduction n'appliquant la carte 60' sur les crosses 75 et 85 qu'en fin de course. Dans le cas où la connexion de la carte s'effectue par rabattement d'un couvercle tel que 22, les contacts 80 et 90 remplissent bien entendu la fonction de détection de fin de course.

Dans le cas de connecteurs munis d'un couvercle tel que 22, il est avantageux de positionner le sommet 82 de la crosse 85 à une hauteur h' inférieure à celle des sommets 72 des crosses 75 des contacts 70 (fig. 2a). Par ailleurs, une fonction de détection de présence de cartes dite anticipée permettant par exemple une alimentation préalable, peut être obtenue en positionnant le sommet 82 à une hauteur h'' supérieure à h (fig. 3a).

Comme le montre la description ci-dessus, la mise en oeuvre des contacts selon l'invention ne nécessite aucune étape de fabrication spécifique. Ceci permet une économie notable sur les frais de fabrication.En outre, une seule bande continue peut servir pour les deux rangées, à condition qu'elle comporte des tronçons comprenant les contacts 80 et 90 en popsition appropriée.

On remarquera à la figure 4a un élément de pontage 83 connecte électriquement un des contacts, ici 80, mais ce pourrait être le contact 90, à un contact 70 adjacent. Ceci permet en particulier d'utiliser les contacts 80 et 90 également pour une fonction électrique, en particulier de mise sous tension de la carte 60'.

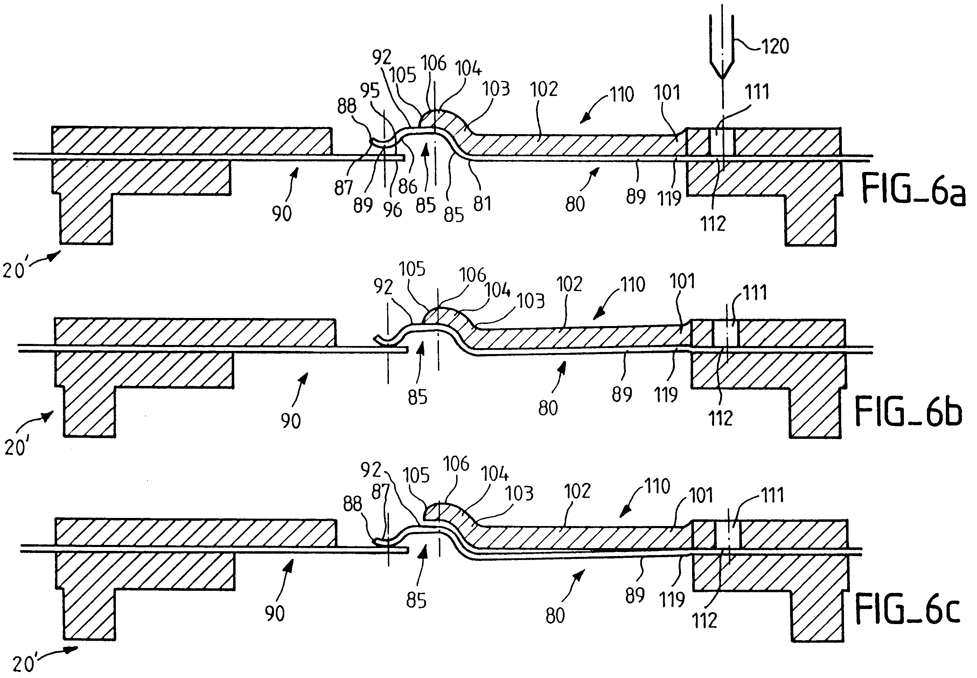

Aux figures 6a à 6c, on voit que la partie supérieure de la lame supérieure 80 est recouverte par une langue (ou lame) 110 électriquement isolante venant de moulage avec le cadre 20' dans lequel sont surmoulés les contacts 70, 80 et 90. La langue (ou lame) 110 s'étend depuis une région proximale 101 où elle recouvre une région proximale 119 de la lame 80 jusqu'à une région supérieure 92 de préférence aplatie de la crosse 85, le doigt 110 se terminant par une extrémité 105. La langue 110 présente ainsi une région 102 qui recouvre la partie rectiligne 89 de la lame 80, une région d'inflexion 103, et une région recourbée 103 recouvrant en partie la crosse 85, et une région de sommet 106.
Cette région de sommet 106 est susceptible d'être poussée par une carte 60' introduite dans le cadre, par exemple comme représenté à la figure 3a.
La langue 110 étant électriquement isolante, la lame 80 ne peut produire de contact non désiré ou de court-circuit sur la face inférieure de la carte 60'.
La figure 6a représente le cadre de contact en position de repos.
La figure 6b représente le cadre de contact en position de détection après introduction d'une carte, les lames 80 et 90 étant en contact électrique en raison de la flexion induite par l'appui de la carte sur le sommet 106.
La figure 6c représente le cadre de contact dans une position hypothétique où les lames 80 et 90 ont été mises en contact électrique par appui direct sur l'extrémité 87, 88 de la lame 80. Cette figure montre que la lame 80 et la langue 110 ne sont pas mécaniquement solidaires, ce qui présente l'avantage de ne pas modifier l'élasticité de la lame 80. La langue 110 en matériau isolant est réalisée par moulage, en même temps que le cadre 20' est surmoulé autour des lames 70, 80 et 90.
L'épaisseur de la langue 110 doit être suffisante pour un bon écoulement de la matière lors du surmoulage et pour une bonne solidité. Elle ne doit pas être trop forte afin que l'augmentation de la rigidité du contact n'entraîne pas un accroissement exagéré de la force d'introduction de la carte. L'épaisseur de 0,6 mm est un compromis pour le matériau utilisé dans la réalisation.
Lors du surmoulage, la matière peut se glisser entre le côté de la lame de contact et la paroi du moule, puis passer dessous et soulever la lame 90, créant ainsi une deuxième langue isolante sous ladite lame. Pour éviter ceci le moule présente une aiguille 120 (fig. 6a) qui vient appuyer sur le pied 112 de la lame 90 afin de limiter son soulèvement. Cette aiguille 120 est la cause du trou 111 visible dans l'isolant au début de la langue.

## Revendications

**1-** Cadre de contact pour carte électronique, comportant un corps isolant dans lequel sont disposées une première et une deuxième rangées d'éléments de contact électrique présentant une face de contact avec la carte et définissant des paires d'élements de contact situés en vis-à-vis ainsi qu'une première et une deuxième lame de contact de détection caractérisé en ce que la première lame de détection (80) présente une région d'appui (92) de la carte coopérant mécaniquement avec la carte de manière que, lorsque la carte est mise en place par rapport au cadre de contact, la première (80) et la deuxième (90) lame de contact viennent en contact électrique, et en ce qu'il comporte une région électriquement isolante (110) disposée sur une face supérieure de la première lame, au moins sur ladite région d'appui (92).

**2-** Cadre de contact selon la revendication 1, caractérisée en ce que ladite région électriquement isolante est une lame isolante (110) formant une seule pièce avec le corps isolant et raccordée à celui-ci par une région proximale (101) recouvrant une région proximale de la première lame.

**3-** Cadre de contact selon les revendications 1 et 2, caractérisé en ce que la première (80) et la deuxième (90) lames de contact de détection sont disposées respectivement sur la première et la deuxième rangée, en vis-à-vis l'une de l'autre, au moins la première lame de contact (80) ayant une longueur supérieure à celle des éléments de contact.

**4-** Cadre de contact selon une des revendications 1 à 3, caractérisé en ce que la première lame (80) présente une extrémité distale en forme de crosse (85) dont la concavité est dirigée du côté de la face de contact (72) des éléments de contact électreque (70).

**5-** Cadre de contact selon la revendication 4 caractérisé en ce que ladite extrémité distale en forme de crosse (85) présente un prolongement (89) en forme de crosse dont la concavité est dirigée du côté opposé à la face de contact (72) des éléments de contact électrique (70).

**6-** Cadre de contact selon la revendication 5 caractérisé en ce que la deuxième lame de contact (90) présente une extrémité distale (95) en forme de palette , ledit prolongement (89) de la première lame (80) venant en recouvrement avec au moins une partie de ladite extrémité distale (95) en forme de palette.

**7-** Cadre de contact selon une des revendications 3 à 6, caractérisé en ce qu'il comporte un élément de liaison (83) connectant au moins une lame de contact (80,90) à un élément de contact (70) adjacent.

**8-** Cadre de contact selon la revendication 4 caractérisé en ce que ladite extrémité distale en forme de crosse (85) présente un sommet (82) dépassant d'un bord du cadre de contact d'une hauteur (h') inférieure à la hauteur (h) dont un sommet (72) des éléments de contact (70) dépasse dudit bord (20'').

**9-** Cadre de contact selon la revendication 4, caractérisé en ce que ladite extrémité distale en forme de crosse présente un sommet (82) dépassant d'un bord du cadre de contact d'une hauteur (h'') supérieure à la hauteur (h) dont un sommet (72) des éléments de contact (70) dépasse dudit bord (20'').

**10-** Connecteur caractérisé en ce qu'il comporte un cadre de contact selon une des revendications précédentes.

**11-** Connecteur selon la revendication 10, caractérisé en ce qu'il comporte un couvercle comprenant un logement de la carte et qui est articulé par rapport au cadre de contact.

**12-** Connecteur selon la revendication 11, caractérisé en ce qu'il comporte un guide de carte profilé de manière à appuyer la carte en direction du cadre de contact et enfoncer la carte en direction du cadre de contact et enfoncer les éléments de contact et au moins la première lame (80) au voisinage d'une position de fin de course de la carte.
